# EUROPÄISCHE PATENTANMELDUNG

(11) **EP 1 926 166 A1**
(43) Veröffentlichungstag der Anmeldung: **28.05.2008**
(21) Anmeldenummer: 07033556.7
(22) Anmeldetag: 16.11.2007
(51) Int. Cl.: H01M 8/04, H01M 8/06

(54) **Brennstoffzellenheizgerät**

(30) Priorität: 22.11.2006 AT 19332006
(71) Anmelder: Vaillant GmbH, 42859 Remscheid (DE)
(72) Erfinder: Badenhop, Thomas, 51688 Wipperfürth (DE); Berg, Joachim, 42859 Remscheid (DE); Götz, Klaus, 42653 Solingen (DE); Kohlhage, Jörg, 45329 Essen (DE); Kraus, Matthias, 42929 Wermelskirchen (DE); Oerder, Bodo, 42855 Remscheid (DE); Paulus, Jochen, 42655 Solingen (DE)
(74) Vertreter: Hocker, Thomas

(57) **Zusammenfassung**

Brennstoffzellenheizgerät mit einem Heizgerät (3), welches über eine Heizgerätabgasleitung (8) verfügt, und einem Brennstoffzellensystem (4), welches über eine Brennstoffzelle mit einer brenngasführende Anode, einer sauerstoffführende Kathode und einem dazwischen angeordneten Elektrolyt verfügt, wobei die Abgase der Anode und der Kathode getrennt aus dem Brennstoffzellensystem (4) in eine Anodenabgasleitung (7) und eine Kathodenabluftleitung (5) geführt werden, die Heizgerätabgasleitung (8) und die Anodenabgasleitung (7) in eine gemeinsame Abgasführung (9) münden und die Kathodenabluftleitung (5) in eine separate Abluftführung (10) mündet.

## Beschreibung

Die Erfindung bezieht sich auf ein Brennstoffzellenheizgerät mit einem konventionellen Heizgerät und einem Brennstoffzellensystem, welches über eine Brennstoffzelle mit einer brenngasführende Anode, einer sauerstoffführende Kathode und einem dazwischen angeordneten Elektrolyten verfügt.

In Brennstoffzellen findet eine elektrochemische Reaktion statt. Hierbei reagiert Wasserstoff mit Sauerstoff zu Wasserdampf, wobei elektrische und thermische Nutzenergie entsteht.

2 H₂ + O₂ -> 2 H₂O

Wasserstoff ist ein Sekundärenergieträger. Er kann in Reformern gewonnen werden. Hierbei reagieren Kohlenwasserstoffe CₙHₘ in Anwesenheit von Katalysatoren mit Luftsauerstoff O₂ und / oder Wasserdampf H₂O zu Kohlendioxyd CO₂ und molekularem Wasserstoff H₂.

2 CₙHₘ + (2n+m/2) O₂ -> 2n CO₂ + m H₂O

Da die Reaktionen jedoch nicht mit reinem Sauerstoff, sondern vielmehr mit Luft (21 % Sauerstoff, 79 % Stickstoff) stattfinden, verändern sich die Reaktionsgleichungen. Bei stöchiometrischer partieller Reaktion ergibt sich im Reformer für Methan (CH₄) folgende Gleichung.

CH₄ + O₂ + 79/21 N₂ -> CO₂ + 2 H₂ + 79/21 N₂

Ferner wird eine Brennstoffzelle stets mit Luftüberschuss betrieben. Bei Polymermembran-Brennstoffzellen (PEM) wandern Protonen (H⁺) durch den Elektrolyten zur Kathode, an der folgende Reaktion stattfindet.

Stöchiometrisch: 2 H⁺ + ½ O₂ + 2 e⁻ -> H₂O

Unter Berücksichtigung der Luftzahl λ sowie der Tatsache, dass die Kathode Luft anstelle von Sauerstoff führt, ergibt sich folgende Gleichung

2 H⁺ + λ/2 (O₂ + 79/21 N₂) + 2 e⁻ -> H₂O + (λ - 1)/2 O₂ + λ/2 79/21 N₂

Hieraus wird deutlich, dass einerseits auf der Kathodenseite nur nichtbrennbare Stoffe geführt werden und andererseits das Kathodenabgas überwiegend aus Luftbestandteilen besteht.

Bei oxidkeramischen Brennstoffzellen (SOFC) findet die Reaktion an der Anodenseite statt; O²⁻-Ionen wandern durch den Elektrolyten. Demnach werden von dem der Kathode zugeführten Volumenstrom λ (O₂ + 79/21 N₂) als Kathodenabgasstrom (λ-1) O₂ + λ 79/21 N₂ abgeführt. Aus hier wird deutlich, dass der Kathodenabgasstrom aufgrund des üblichen Luftüberschusses (2 < λ < 9) groß und nicht brennbar ist.

Brennstoffzellenheizgeräte sind Brennstoffzellenanlagen, die Strom produzieren und deren Abwärme zu Heizzwecken für Brauch- und Warmwasser genutzt wird. Brennstoffzellenheizgeräte werden häufig in bestehenden Wohnhäusern installiert. Zur Abführung der Abgase ist man bestrebt, vorhandene Abgassysteme von bereits installierten Heizungsanlagen zu nutzen. Diese sind jedoch aufgrund der sehr hohen Abgasvolumenströme eines Brennstoffzellenheizsystems häufig unterdimensioniert, so dass beispielsweise gemäß DE 10 2007 001 251 A1 die Installation einer neuen, gemeinsamen Abgasleitung mit wesentlich größerem Querschnitt notwendig ist.

Bei dem aus DE 100 06 555 A1 bekannten Blockheizkraftwerk mit einer Brennstoffzelle werden Kathodenabluft und Anodenabgas vermischt und schließlich gemeinsam mit den Abgasen des Zusatzbrenners aus dem System abgeführt. Aus der DE 10 2005 053 634 A1 ist eine Brennstoffzelle mit integrierter Nachverbrennung bekannt. Es wird eine Vermischung von Kathodenabluft und Anodenabgas unmittelbar hinter der Brennstoffzelle vorgeschlagen. Auch diese Systeme bedingen Abgassysteme mit großem Querschnitt.

Der Erfindung liegt die Aufgabe zugrunde, eine Nutzung vorhandener Abgassysteme für Brennstoffzellenheizsysteme zu ermöglichen.

Erfindungsgemäß wird dies gemäß den Merkmalen des unabhängigen Vorrichtungsanspruchs 1 dadurch erreicht, dass bei einem Brennstoffzellenheizgerät mit einer Brennstoffzelle und einem Heizgerät lediglich das Abgas des Heizgerätes und das Anodenabgas gemeinsam über eine gemeinsame Abgasführung abgeleitet werden. Beide Abgasteilströme müssen aufgrund ihrer zündfähigen und / oder giftigen Bestandteile von Menschen ferngehalten werden. Zudem sind diese Abgasteilströme wesentlich geringer als der Kathodenabgasstrom.

Gemäß den Merkmalen des abhängigen Anspruchs 2 kann die Kathodenabluft in den Aufstellraum geleitet werden, da die Bestandteile der Kathodenabluft weder giftig noch explosiv sind. Da die Kathodenabluft jedoch warm ist, kann hierdurch zumindest teilweise der Aufstellraum beheizt werden. Dies sollte jedoch nur dann geschehen, wenn ein ausreichend großer Sauerstoffanteil im Abgas vorhanden ist oder dem Aufstellraum von anderer Seite genügend Sauerstoff zugeführt wird. Gleichzeitig ist darauf zu achten, dass es durch die Feuchte des Kathodenabgases im Aufstellraum nicht zu einer Schimmelbildung kommt. Hierzu gibt es bekannte Vorrichtungen zur Entfeuchtung des Kathodenabgasstroms, die deshalb hier nicht näher beschrieben werden.

Alternativ hierzu kann gemäß den Merkmalen des abhängigen Anspruchs 3 die Kathodenabluft, vorzugsweise über eine Außenwandleitung, aus dem Aufstellraum in die Umgebung geleitet werden.

Gemäß den Merkmalen des abhängigen Anspruchs 4 befindet sich zwischen der Anodenabgasleitung und der Kathodenabluftleitung eine Verbindung mit Absperrorgan. Hierdurch ist es möglich, dass auch Kathodenabluft in die gemeinsame Abgasführung geleitet wird.

Gemäß den Merkmalen des abhängigen Anspruchs 5 befindet sich in der Kathodenabluftleitung ein Absperrorgan. Hierdurch kann erreicht werden, dass die Kathodenabluft ausschließlich über die Abgasführung, nicht jedoch in den Aufstellraum oder die Außenumgebung über die separate Leitung geführt wird. Es ist auch vorstellbar, dass die Drosselorgane teilweise geöffnet bzw. geschlossen sind, so dass die Volumenströme reduziert bzw. erhöht werden können.

Gemäß den Merkmalen des abhängigen Anspruchs 6 kann es sich bei den Absperrorganen um Ventile oder Stopfen handeln.

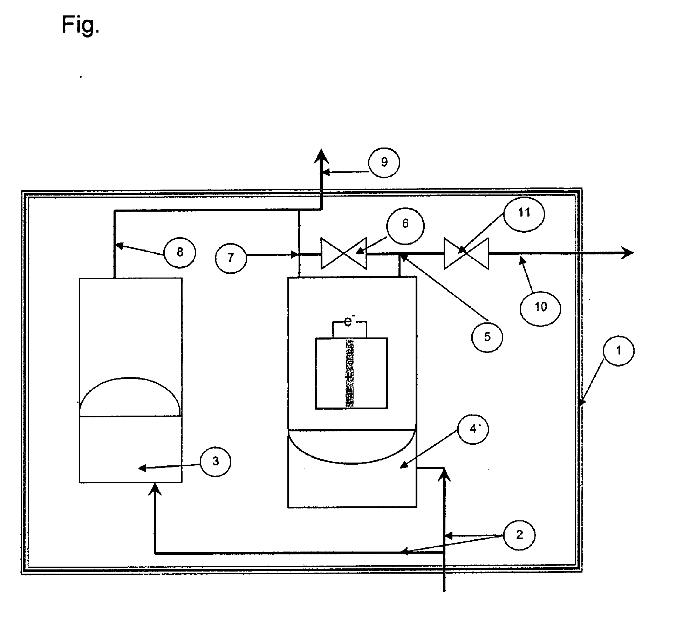

Die Erfindung wird nun anhand der Figur detailliert erläutert.

Die Figur zeigt ein Brennstoffzellenheizgerät mit einem konventionellen Heizgerät sowie einem Brennstoffzellensystem 4 in einem gemeinsamen Aufstellraum 1. Eine Erdgasleitung 2 führt sowohl zu dem Heizgerät 3 als auch zu dem Brennstoffzellensystem 4. In dem Heizgerät 3 wird Erdgas aus der Erdgasleitung 2 zusammen mit Luftsauerstoff verbrannt. Die Abgase werden abgekühlt, wobei die Wärme auf ein Heizsystem übertragen wird. Das abgekühlte Abgas gelangt in eine Heizgeräteabgasleitung 8 und mündet von dort in eine Abgasführung 9.

Im Brennstoffzellensystem 4 wird Erdgas zusammen mit Luft und / oder Wasserdampf (CPOX: Luft alleine; ATR: Luft und Wasserdampf; SR: nur Wasserdampf) zu einem wasserstoffreichen Prozessgas reformiert. Dieses Prozessgas wird der Anode einer Brennstoffzelle zugeführt. Der Kathode der Brennstoffzelle wird sauerstoffhaltige Luft zugeführt. Beide Gasströme werden befeuchtet. Bei PEM-Brennstoffzellen wandern Protonen durch den Elektrolyten von der Anode zur Kathode. An der Kathode findet die Reaktion statt. Bei SOFC-Brennstoffzellen wandern O²⁻ - lonen von der Kathode durch den Elektrolyten zur Anode.

In beiden Fällen ist in der Regel der Brennstoffumsatz in der Brennstoffzelle nicht vollständig. Daher ist es zumeist notwendig, das Anodenabgas in einem Brenner nachzuverbrennen, wobei der Brenner häufig katalytisch oder katalytisch unterstützt den Brennstoff umsetzt. Sowohl das Anodenabgas als auch die Kathodenabluft werden thermisch genutzt und anschließend in die Kathodenabluftführung 5 bzw. in die Anodenabgasleitung 7 eingeleitet. Die Anodenabgasleitung 7 mündet ebenso wie die Heizgerätabgasleitung 8 in eine Abgasführung 9. Dem gegenüber führt die Kathodenabluftführung 5 in eine Abluftführung 10, welche durch die Außenwand des Aufstellraumes 1 in die Umgebung führt. Zwischen der Kathodenabluftführung 5 und der Anodenabgasleitung 7 befindet sich ein Absperrorgan 6, bei dem es sich vorzugsweise um ein Regelventil handelt. Auch in der Abluftführung 10 befindet sich ein Absperrorgan 11, vorzugsweise ein regelbares Ventil.

Bei der Abgasführung 9 kann es sich beispielsweise um ein koaxiales Luft-Abgassystem handeln, bei dem im Inneren das verbrauchte Abgas geleitet wird, während koaxial hierzu im Gegenstrom Frischluft für das Heizgerät 3 und/oder das Brennstoffzellensystem 4 geleitet wird. Ein derartiges koaxiales Luft-Abgassystem hat den Vorteil, dass Wärme vom Abgas auf die Frischluft übertragen werden kann.

Wird das Heizgerät 3 isoliert betrieben, so wird das Drosselorgan / Regelventil 6 geschlossen. Die Abgase des Heizgerätes 3 werden über die Heizgerätabgasleitung 8 in die Abgasführung 9 geleitet und entweichen beispielsweise durch einen Kamin über das Dach in die Umgebung.

Wird das Brennstoffzellensystem 4 isoliert betrieben, so strömt das Anodenabgas über die Anodenabgasleitung 7 in die Abgasführung 9. Die Kathodenabluft strömt über die Kathodenabluftführung 5 und das geöffnete Absperrorgan 11 in die Abluftführung 10, welche die Abluft durch die Außenwand des Aufstellraums 1 in die Umgebung führt.

Bei Teillast des Brennstoffzellensystems ist es möglich, dass die Abgasführung 9 ausreichend dimensioniert ist, um auch die Kathodenabluft abführen zu können. Das Drosselorgan 6 zwischen Anodenabgasleitung 7 und Kathodenabluftführung 5 kann geöffnet sowie das Drosselorgan 11 in der Abluftführung 10 geschlossen werden. In diesem Fall wird das gesamte Anodenabgas als auch die Kathodenabluft über die Abgasführung 9 geleitet.

Wird die Belastung des Brennstoffzellensystems 4 erhöht, so ist die Abgasführung 9 nicht mehr ausreichend groß dimensioniert, um Anodenabgas und Kathodenabluft abführen zu können. Gegebenenfalls müssten die notwendigen Gebläse bzw. Kompressoren derartig hohe Förderleistungen erbringen, dass eine Abführung der Gase zwar möglich wäre, jedoch diese nicht wirtschaftlich sinnvoll erschiene. Das Drosselorgan 11 in der Abluftführung wird sodann ganz oder teilweise geöffnet, so dass Kathodenabluft über die Abluftleitung 10 entweichen kann.

Bei Neuinstallationen ist es möglich, die Abgasführung 9 derartig groß zu dimensionieren, dass in jedem Fall die Abgase des Heizgerätes 3 das Kathodenabgas der Brennstoffzelle als auch die Kathodenabluft der Brennstoffzelle über diese Abgasführung 9 geleitet werden können. Optional ist erfindungsgemäß denkbar, dass die abgasseitigen Anschlüsse des Brennstoffzellensystems 4 vereinheitlicht sind. In diesem Fall kann der Installateur bei der Installation Stopfen als Drosselorgane verwenden. Ist die Abgasführung 9 ausreichend dimensioniert, so wird in der Abluftführung 10 ein Pfropfen eingesetzt, so dass diese Leitung nicht durchströmt wird. Gleichzeitig bleibt die Verbindung zwischen der Anodenabgasleitung 7 und der Kathodenabluftleitung 5 geöffnet. Ist die Abgasführung 9 jedoch klein dimensioniert und nicht ausreichend für den gesamten Abgasstrom, so wird ein Pfropfen als Absperrorgan 6 zwischen Anodenabgasleitung 7 und Kathodenabluftleitung 5 gesetzt. Dem gegenüber wird der Pfropfen in die Abluftführung 10 nicht eingesetzt, so dass diese Leitung offen bleibt und in den Aufstellraum 1 oder außerhalb des Gebäudes geleitet werden kann.

## Patentansprüche

1. Brennstoffzellenheizgerät mit einem Heizgerät (3), welches über eine Heizgerätabgasleitung (8) verfügt, und einem Brennstoffzellensystem (4), welches über eine Brennstoffzelle mit einer brenngasführende Anode, einer sauerstoffführende Kathode und einem dazwischen angeordneten Elektrolyt verfügt, **dadurch gekennzeichnet, dass** die Abgase der Anode und der Kathode getrennt aus dem Brennstoffzellensystem (4) in eine Anodenabgasleitung (7) und eine Kathodenabluftleitung (5) geführt werden, die Heizgerätabgasleitung (8) und die Anodenabgasleitung (7) in eine gemeinsame Abgasführung (9) münden und die Kathodenabluftleitung (5) in eine separate Abluftführung (10) mündet.

2. Brennstoffzellenheizgerät nach Anspruch 1, **dadurch gekennzeichnet, dass** die Abluftführung (10) der Kathodenabluftleitung (5) in den Aufstellraum (1) des Brennstoffzellenheizgerätes mündet.

3. Brennstoffzellenheizgerät nach Anspruch 1, **dadurch gekennzeichnet, dass** die Abluftführung (10) der Kathodenabluftleitung (5) aus dem Aufstellraum (1) in die Umgebung, vorzugsweise über eine Außenwandleitung mündet.

4. Brennstoffzellenheizgerät nach einem der Ansprüche 1 bis 3, **dadurch gekennzeichnet, dass** zwischen Anodenabgasleitung (7) und Kathodenabluftleitung (5) eine Verbindung mit Absperrorgan (6) angeordnet ist.

5. Brennstoffzellenheizgerät nach Anspruch 4, **dadurch gekennzeichnet, dass** in der Kathodenabluftleitung (5) ein Absperrorgan (11) angeordnet ist.

6. Brennstoffzellenheizgerät nach einem der Ansprüche 4 oder 5, **dadurch gekennzeichnet, dass** die Absperrorgan (6, 11) Ventile oder Stopfen sind.
